# EUROPÄISCHE PATENTSCHRIFT

(11) **EP 1 738 846 B1**
(45) Veröffentlichungstag und Bekanntmachung des Hinweises auf die Patenterteilung: **30.09.2009**
(21) Anmeldenummer: 06012818.8
(22) Anmeldetag: 22.06.2006
(51) Int. Cl.: B21J 15/50, B23B 47/28, B23B 51/04

(54) **Vorrichtung zum Lösen einer Einpressmutter oder Hohlnietverbindung**
Process for removing a press nut or a hollow rivet connection
Procédé pour supprimer un écrou encastré ou une connection par rivet creux

(30) Priorität: 30.06.2005 DE 102005030979; 10.02.2006 DE 102006006440
(43) Veröffentlichungstag der Anmeldung: 03.01.2007
(73) Patentinhaber: MV Marketing + Vertriebs-GmbH & Co. KG Wieländer + Schill, 78054 Villingen-Schwenningen (DE)
(72) Erfinder: Hakenjos, Werner, 78056 Villingen-Schwenningen (DE); Strasser, Martin, 78073 Bad Dürrheim (DE)
(74) Vertreter: Blumbach - Zinngrebe

(56) Entgegenhaltungen:
- DE-B3- 10 354 726
- DE-U1- 20 010 941
- US-A- 981 227
- US-A- 4 413 413
- US-A1- 2005 044 684
- US-B1- 6 629 804

## Beschreibung

Die Erfindung betrifft eine Vorrichtung zum Lösen einer Hohlnietverbindung oder Einpressmutter. Im speziellen ist ein Werkzeug zum Ausbohren von Einnietmuttern Gegenstand der Erfindung.

Um Nieten zu entfernen, benutzt man in der Praxis zumeist einen Trennschleifer oder entfernt die Nieten mit Hammer und Meißel.

Die DE 600 05 891 zeigt dagegen ein Verfahren, bei dem ein Niet mit einem Fräser abgefräst wird. Die US 6,629,804 B1 zeigt ein Werkzeug zum Abfräsen der an einem Schaft angeordneten Mutter eines Wasserhahns. Dabei kann das Werkzeug an dem Schaft befestigt und mittels eines Fräsers die Mutter abgetragen werden.

Beim Abfräsen eines Niets mittels eines sich drehenden Fräsers ist problematisch, dass die Zentrierung des Fräsers schwierig ist. So neigt der Fräser meist zum Abgleiten, was zu Beschädigungen des umgebenden Materials führen kann.

Darüber hinaus ist insbesondere bei Bauteilen, bei welchen die Nietverbindung nur von einer Seite zugänglich ist, problematisch, dass beim Abfräsen Reste des Niets herunterfallen. Besonders bei Fahrzeugen ist es höchst unerwünscht, dass beispielsweise das Unterteil eines Niets in einen Karosseriehohlraum fällt, wo es dann zu Geräuschen und Beschädigungen führen kann. Neben Geräuschen können die Nietreste auch zu Kontaktkorrosion führen. Beschädigungen vorhandener Hohlraumversiegelungen durch Nietreste können zudem zu weiteren Korrosionsschäden führen.

Der Erfindung liegt demgegenüber die Aufgabe zugrunde, eine Vorrichtung und ein Verfahren zum Lösen einer Nietverbindung bereitzustellen, bei welchem der Niet leicht entfernt werden kann und das Fortlaufen des Werkzeugs möglichst vermieden wird.

Darüber hinaus ist Aufgabe der Erfindung, zu verhindern, dass das Unterteil eines Niets nach dem Entfernen des Oberteils herabfällt und so beispielsweise in einen Karosseriehohlraum fallen kann.

Die Aufgabe der Erfindung wird bereits durch eine Vorrichtung zum Lösen einer Nietverbindung nach Anspruch 1 erreicht. Bevorzugte Ausführungsformen und Weiterbildungen der Erfindung sind den jeweiligen Unteransprüchen zu entnehmen.

Gemäß der Erfindung ist eine Vorrichtung gemäß Anspruch 1 zum Lösen einer einer Hohlnietverbindung oder einer Einpressmutter vorgesehen, welche ein materialabtragendes Werkzeug umfasst, das um einen Stift rotierbar zum Abtragen eines Nietkopfes angeordnet ist. Vorzugsweise ist das Material abragende Werkzeug um den Stift rotierbar zum Abtragen eines Nietkopfes angeordnet.

Unter materialabtragendem Werkzeug im Sinne der Anmeldung wird beispielsweise ein Bohrer oder ein Fräser verstanden, welcher um einen zentral angeordneten Stift rotiert. Dabei kann es sich sowohl um ein achsensymmetrisches Werkzeug handeln, in dessen Rotationsachse der Stift angeordnet ist, aber auch eine um einen Stift laufende einzelne Schneide oder mehrere Schneiden, die nicht achsensymmetrisch sind, sind gemäß der Erfindung als mögliche Ausführungsformen vorgesehen. Der Stift ist mit einem unteren Ende in eine Bohrung oder ein Gewinde eines Niets einführbar. Gemäß der Erfindung ist also vor allem das Entfernen von Nietmuttern oder Nieten, die zumindest eine Aussparung aufweisen, vorgesehen.

Grundsätzlich eignet sich die Erfindung aber auch zum Entfernen von Nieten im allgemeinen, sofern diese zuvor mit einer Bohrung zum Einführen des Stiftes versehen werden.

Durch den Stift wird erreicht, dass das materialabtragende Werkzeug optimal zentriert ist. Eine Beschädigung des umgebenden Bleches ist so ausgeschlossen. Darüber hinaus dient der Stift bei geeigneter Formgebung des unteren Endes, um das Unterteil des Niets, welches nicht weggefräst wird, festzuhalten.

Der Stift weist am unteren Ende ein Gewinde zum Einschrauben in einen Niet, insbesondere in eine Einpressmutter auf. So kann die Vorrichtung zum Lösen einer Nietverbindung zunächst in eine Nietmutter eingeschraubt werden. Mit dem rotierenden Werkzeug wird dann das Oberteil der Nietmutter, auch als Nietkopf bezeichnet, abgefräst. Der verbleibende Restniet bleibt am Stift hängen und kann herausgezogen werden, ohne dass die Gefahr besteht, dass Teile davon in einen Karosseriehohlraum fallen.

Bei einer weiteren bevorzugten Ausführungsform der Erfindung ist das materialabtragende Werkzeug als Kronenfräser ausgebildet. Es handelt sich dabei um ein im Wesentlichen achsensymmetrisches Werkzeug. Der Kronenfräser weist eine im Wesentlichen achsensymmetrische Bohrung in der Mitte auf, in welcher der Stift zum Zentrieren und Festhalten von Nietresten angeordnet ist. Ein derartiger Kronenfräser ermöglicht eine spanende Materialabnahme. Die Geometrie eines Kronenfräsers hat gegenüber der Geometrie eines Metallbohrers den Vorteil, dass die in Folge der mittigen Bohrung vorhandenen Kanten auf der Innenseite des Werkzeugs weniger zum Herausbrechen neigen.

Bei einer Weiterbildung der Erfindung umfasst das materialabtragende Werkzeug einen Aufnahmedorn, an welchem der Werkzeugkopf, insbesondere der Kronenfräser befestigbar ist. Das materialabtragende Werkzeug ist so zumindest zweiteilig ausgebildet. Der Kronenfräser kann leicht ausgetauscht werden und gegen einen anderen ersetzt werden, insbesondere wenn er verschlissen ist oder zur Verwendung eines anderen Fräserdurchmessers. Der Aufnahmedorn kann dazu dienen, das Werkzeug in einer Bohrmaschine einzuspannen oder. Auch sind gemäß der Erfindung im Aufnahmedorn Lager vorgesehen, um das materialabtragende Werkzeug drehbar zu dem Stift zu lagern.

Bevorzugter Weise weist der Aufnahmedorn ein Gewinde auf, an welchem der Kronenfräser festgeschraubt werden kann.

Gemäß der Erfindung ist der Stift gegen das materialabtragende Werkzeug zeitweise arretierbar. Dies hat den Vorteil, das in einem ersten Bearbeitungsschritt der Stift arretiert werden kann. So dreht sich der Stift auch dann, wenn nur das materialabtragende Werkzeug in der Bohrmaschine eingespannt ist. Mit arretiertem Stift kann dann das Gewinde am unteren Ende des Stiftes in eine Nietmutter eingeschraubt werden. In einem zweiten Bearbeitungsschritt kann die Arretierung gelöst werden und mittels des Fräsers das Oberteil des Niets abgefräst werden.

In bevorzugter Weise erfolgt die Arretierung über eine Arretiermutter und einen Arretierstift am oberen Ende der Vorrichtung. Der Stift erstreckt sich dann vom unteren Ende des materialabtragenden Werkzeugs bis zum oberen Ende und kann am oberen Ende arretiert werden.

Bei einer Weiterbildung der Erfindung ist der Stift und das materialabtragende Werkzeug mittels eines Verrastmechanismus arretierbar, welcher auch mit einer Arretiermutter kombiniert sein kann.

In bevorzugter Weise löst sich ab einem bestimmten Drehmoment der Verrastmechanismus. So ist es möglich, dass der Bediener zum Eindrehen des Stiftes und zum Abfräsen keine weiteren Bedienungsvorgänge an der Vorrichtung vornehmen muss. Die Vorrichtung wird verrastet beispielsweise in ein Gewinde eingeführt. Mittels einer Bohrmaschine wird das Gewinde hineingedreht. Sobald sich das Gewinde des Stiftes vollständig eingedreht hat, wird der Stift festgehalten, so dass sich der Verrastmechanismus löst. Es dreht sich dann nur noch das materialabtragende Werkzeug, mit welchem das Oberteil des Niets abgefräst wird.

Um die Verrastung ab einem bestimmten Drehmoment zu lösen, ist bei einer besonderen Ausführungsform der Erfindung eines Rutschkupplung vorgesehen.

Bei einer Weiterbildung der Erfindung ist zwischen dem materialabtragenden Werkzeug und dem Stift eine Feder angeordnet, die im arretierten Zustand eine axiale Kraft ausübt. So stehen materialabtragendes Werkzeug und Stift unter Spannung. Sobald die Arretierung gelöst wird, wird der Fräser freigegeben und bewegt sich in axialer Richtung nach vorne.

Bei einer weiteren bevorzugten Ausführungsform der Erfindung ist das materialabtragende Werkzeug auf zumindest einem Lager drehbar zum Stift angeordnet. Ein solches Lager umfasst in einer bevorzugten Ausführungsform eine Buchse, welche insbesondere im Aufnahmedorf integriert sein kann. So wird die Reibung beim Umlaufen des materialabtragenden Werkzeugs, insbesondere des Kronenfräsers wesentlich verringert.

Bei einer Weiterbildung der Erfindung weist der Stift an seinem unteren Ende ein selbstschneidendes Gewinde auf. So können auch Niete mit einer Aussparung, die kein Gewinde aufweisen, also nicht als Nietmuttern ausgestaltet sind, festgehalten werden.

Der Stift und das materialabtragende Werkzeug sind bei einer bevorzugten Ausführungsform der Erfindung zumindest teilweise axial zueinander frei bewegbar ausgestaltet.

So kann der Stift beispielsweise in eingeschraubtem Zustand fest in einem Gewinde sitzen, während das Werkzeug axial bewegt werden und so zum Abtragen des Nietkopfes in Drehung versetzt werden kann.

Bei einer Weiterbildung der Erfindung ist das Werkzeug gegen den Stift dabei zumindest in eine Richtung axial gegen Herausrutschen gesichert. Insbesondere ist vorgesehen, dass das Werkzeug in der zum Niet zeigenden Seite gegen Herausrutschen gesichert ist. So wird verhindert, dass die Vorrichtung zum Lösen einer Nietverbindung beim Benutzen auseinanderfallen kann.

Das materialabtragende Werkzeug ist bevorzugter Weise mittels des Aufnahmedorns in eine Bohrmaschine einspannbar. Hierfür kann eine Spannnut am Aufnahmedorn angeordnet sein, die verhindert, dass das materialabtragende Werkzeug beim Fräsen durchrutscht.

Der Stift hat in bevorzugter Weise einen Durchmesser zwischen 1,5 und 15 mm. Vorgesehen sind verschiedene Stiftdurchmesser zum Anpassen an unterschiedliche Niete. Um den Kopf beziehungsweise das Oberteil eines Niets abzutragen, ist der Durchmesser des materialabtragenden Werkzeugs, also insbesondere des Fräsers 1,5 bis 6 mm größer als der Durchmesser des Stiftes. Über verschiedene Durchmesser des Fräsers kann das Werkzeug verschiedenen Nieten angepasst werden.

Aufnahmedorn und Stift sind bei einer bevorzugten Ausführungsform der Erfindung durch eine Feder in axialer Richtung gespannt. So wird der Aufnahmedorn mit dem Fräser sauber geführt, wobei Aufnahmedorn und Stift durch einen Sicherungsstift oder einen Sicherungsring gegen Auseinanderfallen gesichert sind.

Über eine Nut, in der Sicherungsstift oder Sicherungsring einrastbar ist, wird ein Arretiermechnismus bewirkt, der gleichzeitig eine axiale Sicherung von Stift und Aufnahmedorn bildet.

Damit die Spanabfuhr vorzugsweise nach oben erfolgt, um zu vermeiden dass Späne in die Bohrung fallen, verlaufen bei einer bevorzugten Ausführungsform der Erfindung die Spanflächen des Kronenfäsers zumindest abschnittsweise in einem Winkel von 0,1° bis 30°, bevorzugt von 0,5° bis 15° zur Rotationsachse des Kronenfräsers.

Vorzugsweise verlaufen die Spannuten gerade, so dass der Kronenfäser auch einen Spanwinkel von 0,1° bis 30°, bevorzugt von 0,5° bis 15° aufweist.

Die Schneidkanten des Kronenfräsers sind bei einer weiteren bevorzugten Ausführungsform der Erfindung in zumindest zwei Stufen hinterschliffen. Dabei hat eine erste Stufe vorzugsweise einen Freiwinkel von 5° bis 30° und eine zweite Stufe einen Freiwinkel von 30° bis 70°. So wird eine hohe Stabilität des Werkzeugs an der Spitze bei gleichzeitig genügen großen Ausnehmungen zur Spanabfuhr nach außen ermöglicht.

Zum Entfernen einer Nietmutter wird ein Stift mit einem Gewinde in die Nietmutter eingeschraubt. Nach oder schon während des Einschraubens des Stiftes wird der Kopf der Nietmutter mittels eines um den Gewindestift rotierenden materialabtragenden Werkzeugs abgefräst. Der verbleibende Gewindezapfen wird von dem Stift festgehalten und mittels des Stiftes herausgezogen. Dabei ist der Stift in bevorzugter Weise zunächst gegen das materialabtragende Werkzeug arretiert und wird nach Einschrauben des Stiftes freigegeben.

Die Erfindung ist ausserfür Niet- und Einpressmuttern auch für alle Arten von an einem Blech befestigten Muttern geeignet, also neben Nietmuttern auch für Schweißmuttern, Gewindenietbördelmuttern, Einstanzmuttern, Ankermuttern etc.

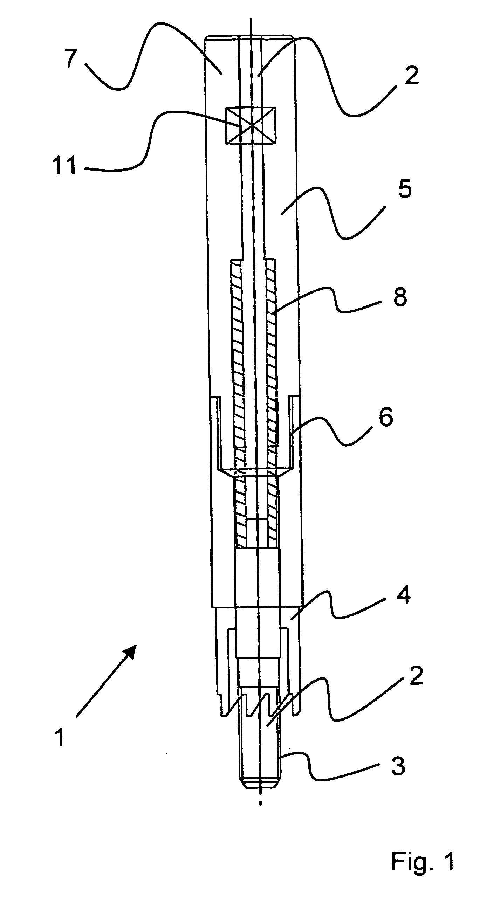

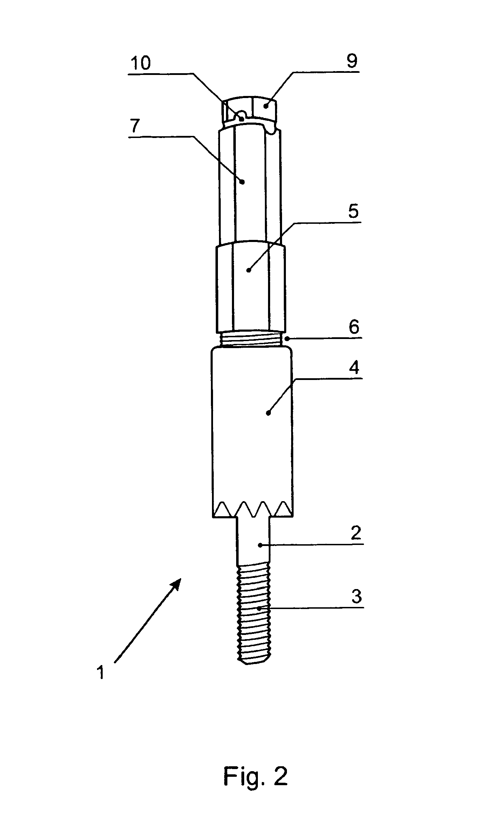

Die Erfindung soll im Folgenden anhand der Figuren Fig. 1 und Fig. 2 näher erläutert werden.
- Fig. 1: zeigt eine schematische Darstellung eines erfindungsgemäßen Werkzeugs zum Lösen einer Nietverbindung,
- Fig. 2: zeigt eine schematische Ansicht eines solchen Werkzeugs in der Draufsicht,
- Fig. 3: zeigt eine weitere Ausführungsform eines erfindungsgemäßen Werkzeugs zum Lösen einer Nietverbindung in einer schematischen Darstellung,
- Fig. 4: zeigt das Werkzeug gemäß Fig. 3 in einer perspektivischen Darstellung in teilweise zerlegtem Zustand,
- Fig. 5: zeigt das Werkzeug gemäß Fig. 3 in einer perspektivischen Darstellung,
- Fig. 6: zeigt schematisch den Kronenfräser des Werkzeugs aus Fig. 3 in einer Detailansicht.

Zu erkennen ist in Fig. 1 schematisch eine Vorrichtung zum Lösen einer Nietverbindung 1. Die Vorrichtung zum Lösen einer Nietverbindung 1 umfasst im Wesentlichen einen Stift 2, welcher am vorderen Ende ein Gewinde 3 zum Einschrauben in eine an einem Blech befestigte Mutter, insbesondere eine Einpressmutter (nicht dargestellt) aufweist. Weiter umfasst die Vorrichtung zum Lösen einer Nietverbindung 1 ein materialabtragendes Werkzeug in Form eines Kronenfräsers 4, der auf einen Aufnahmedorn 5 mittels eines Gewindes 6 aufgeschraubt ist. Der Aufnahmedorn weist einen Einspannschaft 7 auf, der sich am oberen Ende der Vorrichtung befindet. Am Einspannschaft 7 wird die Vorrichtung in eine Bohrmaschine eingespannt. Einspannschaft 7 und Kronenfräser 4 weisen eine mittige Bohrung auf, durch sich der Stift 2 erstreckt. Grundsätzlich ist der Stift 3 im Einspannschaft 7 und Kronenfräser 4 drehbar und axial verschiebbar angeordnet. Zur Reduzierung der Reibung ist der Stift 2 in einer Buchse 8, wie schematisch durch die Schraffur angedeutet ist, gelagert. Weiter verfügt die Vorrichtung zum Lösen einer Nietverbindung 1 über einen Arretiermechanismus 11,, der in der Zeichnung nicht im Detail dargestellt ist. Über den Arretiermechanismus können Stift 2 und Einspannschaft 5 beziehungsweise Kronenfräser 4 sowohl gegen eine Drehbewegung als auch gegen eine Axialbewegung gesichert werden. So kann bei arretiertem Stift 2 das Werkzeug mittels einer Bohrmaschine (nicht dargestellt) am Einspannschaft 7 angetrieben werden. Da der Stift 2 arretiert ist, kann so mittels der Bohrmaschine das Gewinde 3 in eine Nietmutter eingedreht werden. Ist das Gewinde 3 in die Nietmutter eingedreht, löst sich der Arretiermechanismus 11. Der Kronenfräser 4 beziehungsweise Aufnahmedorn 5 ist so frei bewegbar, auch in axialer Richtung. Mittels des Bohrers wird nun der Kronenfräser 4 angetrieben, der sich um den Stift dreht. Der Bediener kann den Kronenfräser dann in axialer Richtung vorschieben und den Kopf beispielsweise einer Einpressmutter (nicht dargestellt) abfräsen. Nach Abfräsen des Kopfes der Einpressmutter bleibt der Gewindestift (nicht dargestellt) am Gewinde 3 des Stiftes 2 hängen und kann mit der gesamten Vorrichtung herausgezogen werden. Das Hineinfallen eines Gewindestiftes in Karosseriehohlräume wird so vermieden.

Fig. 2 zeigt eine schematische Draufsicht einer erfindungsgemäßen Vorrichtung zum Lösen einer Nietverbindung 1. Zu erkennen ist auch hier ein Stift 2, der an seinem unteren Ende ein Gewinde 3 aufweist. Die Vorrichtung weist ferner einen Kronenfräser 4 auf, welcher mittels eines Gewindes 6 an einen Aufnahmedorn 5 mit einem Einspannschaft 7 zum Einspannen in einer Bohrmaschine befestigt ist. Am oberen Ende der Vorrichtung zum Lösen einer Nietverbindung 1 befindet sich eine Arretiermutter 9, über die mittels eines Arretierstiftes 10 Kronenfräser 4 nebst Aufnahmedorn 5 gegen den Stift 2 gesichert werden kann. Sobald das Gewinde 3 in eine Nietmutter eingedrungen ist, wird die Arretierung gelöst. Zusätzlich befindet sich im oberen Teil der Vorrichtung zum Lösen einer Nietverbindung eine Feder (nicht dargestellt), welche nach Lösen der Arretierung den Aufnahmedorn 5 in axialer Richtung nach unten gegen den Stift 2 verschiebt.

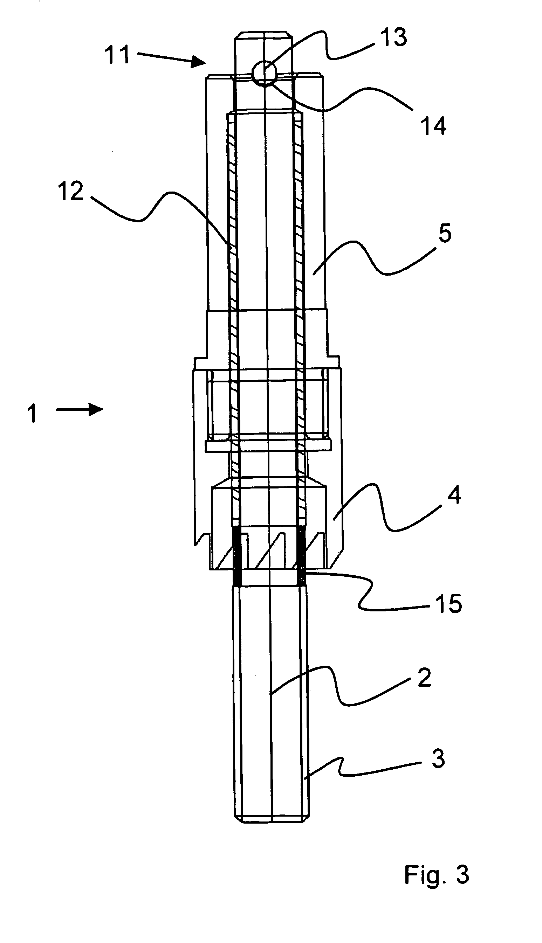

Fig. 3 zeigt eine weitere Ausführungsform eines erfindungsgemäßen Werkzeugs zum Lösen einer Nietverbindung 1 in einer schematischen Darstellung.

Das Werkzeug ist insbesondere zum Ausbohren von Einnietmuttern ausgebildet. Dazu wird es mit einem Stift 2, der am vorderen Ende ein Gewinde 3 aufweist in die zu entfernende Nietmutter geschraubt. Dazu kann das Werkzeug am Aufnahmedorn 5 in eine Bohrmaschine (nicht dargestellt) eingespannt werden. Der Aufnahmedorn 5 ist mit einem Kronenfräser 4 verschraubt.

Alternativ können Aufnahmedorn 5 und Kronenfräser 4 auch als einstückiges Bauteil ausgebildet sein (nicht dargestellt).

Zwischen Aufnahmedorn 5 und Stift 2 befindet sich eine Feder 12, ausgebildet als Spiralfeder, die Aufnahmedorn 2 mit dem Kronenfräser 4 axial gegen den Stift 2 unter Spannung hält. Dazu ist an dem Stift 2 als unterer Anschlag eine Hülse 15 auf dem Stift 2 angeordnet, an der die Feder 12 anliegt. Die gespannte Feder liegt auf ihrer anderen Seite am Aufnahmedorn 5 an, der zur Aufnahme der Feder 12 bis zu dieser Anlagefläche weiter aufgebohrt ist.

Aufnahmedorn 5 und Stift 4 werden durch einen Arretiermechanismus 11 gegen Auseinanderfallen gesichert. Der Arretiermechanismus 11 umfasst einen Sicherungsstift 13, der durch eine Bohrung im Stift geschoben wurde. Der Aufnahmedorn 5 weist eine in etwa korrespondierende Nut 14 auf, in der der Sicherungsstift 13 einrasten kann.

Beim Einschrauben des Werkzeugs sind Aufnahmedorn 5 einschließlich des Kronenfräsers 4 durch den Verrastmechanismus 11 gegen Verdrehen gesichert. Ist das Gewinde 3 eingeschraubt, rutscht der Verrastmechanismus 11 durch, da sich der Stift 2 nicht mehr weiter drehen kann.

Der Bediener kann nun das Werkzeug herunterdrücken, wodurch die Feder 12 zusammengedrückt wird und der Kronenfräser 4 das Blech erreichen kann.

Nach Abfräsen des Niets (nicht dargestellt) bleibt der Rest des Niets am Gewinde 2 des Stiftes 3 hängen und fällt nicht in die Bohrung.

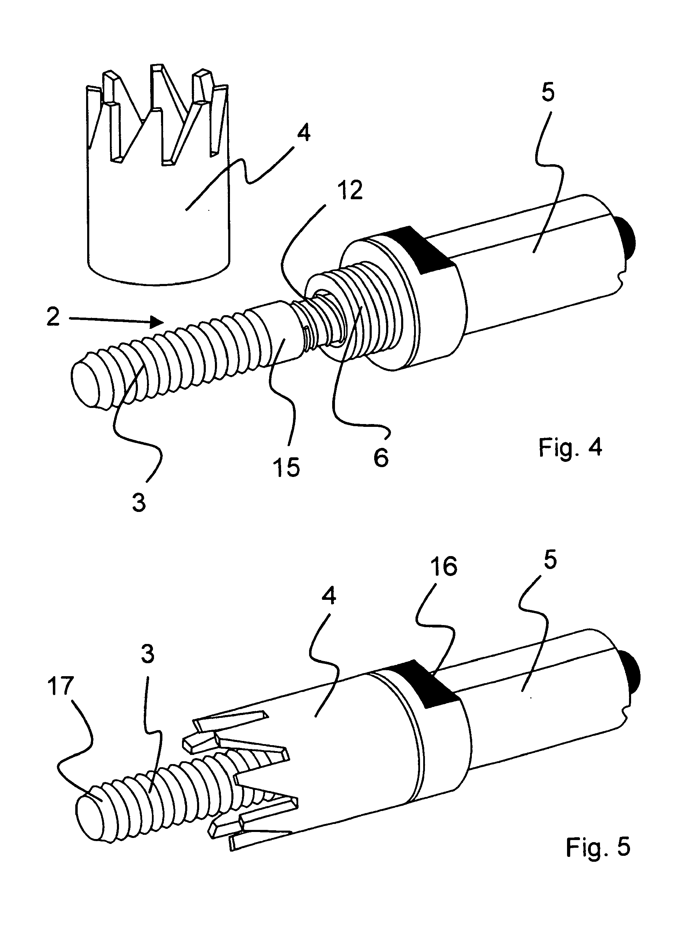

Fig. 4 zeigt das Werkzeug gemäß Fig. 3 in einer perspektivischen Darstellung in teilweise zerlegtem Zustand. Dabei ist der Kronenfräser 4 vom Aufnahmedorn 5 abgeschraubt. Zu erkennen ist das Gewinde 6 des Aufnahmedorns 5 zum Aufschrauben des Kronenfräsers 4.

Der vordere Bereich der in axialer Richtung zwischen Aufnahmedorn 5 und Stift 2 angeordneten Feder 12 ist ebenfalls zu erkennen. An ihrem vorderen Ende liegt die Feder 12 an einer Hülse 15, die auf den Stift 2 geschoben ist, an. In Sinne der Erfindung können Hülse 15 und Stift 2 auch ein Bauteil bilden. Die Hülse 15 gewährleistet eine zuverlässigere Sicherung verglichen einer Feder 12, die direkt an dem Gewinde 3 anliegt.

Fig. 5 zeigt das Werkzeug gemäß Fig. 3 in einer perspektivischen Darstellung, und zwar im zusammengesetzten Zustand. Aufnahmedorn 5 und Kronenfräser 4. sind zusammengesetzt. Zum besseren Zerlegen und Zusammensetzen des Werkzeugs weist der ansonsten im wesentlichen kreiszylindrisch ausgebildete Aufnahmedorn 5 Schlüsselflächen 16 auf, an denen insbesondere ein Gabelschlüssel ansetzbar ist.

Das Gewinde 3 ist zum leichteren Einschrauben vorne mit einer Fase 17 versehen.

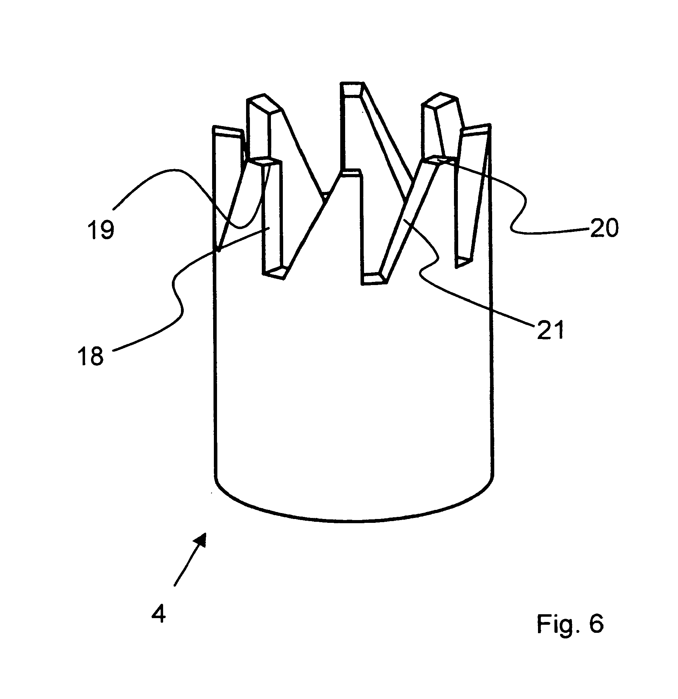

Fig. 6 zeigt schematisch den Kronenfräser des Werkzeugs aus Fig. 3 in einer Detailansicht. Die Schneidflächen 3 des Kronenfräsers sind leicht angeschrägt, so dass sie einen positiven Spanwinkel zwischen 0,5° und 5° haben. Bereits ein derart geringer Spanwinkel ist ausreichend, dass die Spanabfuhr im Wesentlichen nach oben, also in Richtung des Aufnahmedorns (5 aus Fig. 3) erfolgt.

Zur Reduzierung der Reibung sind die Schneidkanten 19 des Kronenfräsers 4 hinterschliffen. Der Hinterschliff umfasst eine erste Stufe 20 mit einem Freiwinkel von 5° bis 25°. Der ersten Stufe 20 schließt sich eine zweite Stufe 21 mit einem Freiwinkel von 35° bis 55° an.

Der geringe Freiwinkel unmittelbar hinter der Schneidkanten 19 verhindert ein schnelles Ausbrechen der Schneidkanten 19. Der im Verlauf zunehmende Freiwinkel ermöglicht, dass eine große Fläche des Fräsermantels von den durch die Freiwinkel gebildeten Ausnehmungen erfasst wird, was die Spanabfuhr verbessert.

Der Kronenfräser weist zwischen vier und sechzehn Scheiden auf. Da dargestellte Ausführungsbeispiel hat acht Schneiden.

### Bezugszeichenliste:

- 1: Vorrichtung zum Lösen einer
Nietverbindung
- 2: Stift
- 3: Gewinde
- 4: Kronenfräser
- 5: Aufnahmedorn
- 6: Gewinde
- 7: Einspannschaft
- 8: Buchse
- 9: Arretiermutter
- 10: Arretierstift
- 11: Arretiermechanismus
- 12: Feder
- 13: Sicherungsstift
- 14: Nut
- 15: Hülse
- 16: Schlüsselfläche
- 17: Fase
- 18: Spanfläche
- 19: Schneidkante
- 20: 1. Stufe
- 21: 2. Stufe

## Patentansprüche

1. Vorrichtung (1) zum Lösen einer Hohlnietverbindung oder einer Einpressmutter, umfassend einen Stift (2), der ein Gewinde (3) zum Einschrauben in eine Hohlnietverbindung oder eine Einpressmutter aufweist, zumindest ein Material abtragendes Werkzeug (4), welches um den Stift (2) rotierbar angeordnet ist und wobei der Stift (2) zumindest mit einem unteren Ende in eine Bohrung oder ein Gewinde eines Niets einführbar ist, um das Unterteil des Niets, welches nicht weggefräst wird, festzuhalten,
**dadurch gekennzeichnet, dass** die Vorrichtung einen Arretiermechanismus (11) aufweist, wobei der Stift (2) gegen das Material abtragende Werkzeug arretierbar ist, so dass der Stift (2) und das Material abtragende Werkzeug während des Einschraubens des Stiftes durch den Arretiermechanismus gegen Verdrehung zueinander gesichert werden.

2. Vorrichtung (1) nach Anspruch 1, **dadurch gekennzeichnet, dass** das Material abtragende Werkzeug als Fräser (4), insbesondere als Kronenfräser ausgebildet ist.

3. Vorrichtung (1) nach Anspruch 2, **dadurch gekennzeichnet, dass** das Material abtragende Werkzeug einen Aufnahmedorn (5) umfasst, an welchem der Fräser (4) befestigbar ist.

4. Vorrichtung nach Anspruch 3, **dadurch gekennzeichnet, dass** der Fräser (4) auf dem Aufnahmedorn (5) verschraubar ist.

5. Vorrichtung (1) nach einem der vorstehenden Ansprüche, **dadurch gekennzeichnet, dass** der Stift in etwa am oberen Ende eine Arretiermutter (9) aufweist.

6. Vorrichtung (1) zum Lösen einer Nietverbindung nach einem der vorstehenden Ansprüche, **dadurch gekennzeichnet, dass** der Arretiermechanismus (11) als Verrastmechnismus ausgebildet ist.

7. Vorrichtung (1) nach Anspruch 7, **dadurch gekennzeichnet, dass** der Verrastmechnismus sich ab einem vorgegebenem Drehmoment löst.

8. Vorrichtung nach einem der vorstehenden Ansprüche, **dadurch gekennzeichnet, dass** zwischen dem Material abtragenden Werkzeug und Stift eine Feder angeordnet ist, die zumindest im arretierten Zustand eine axiale Kraft ausübt.

9. Vorrichtung (1) nach einem der vorstehenden Ansprüche, **dadurch gekennzeichnet, dass** das Material abtragende Werkzeug auf zumindest einem, vorzugsweise zwei Lagern drehbar zum Stift angeordnet ist.

10. Vorrichtung (1) nach einem der vorstehenden Ansprüche, **dadurch gekennzeichnet, dass** das Material abtragende Werkzeug zumindest eine Buchse (8) zur Aufnahme des Stiftes (2) aufweist.

11. Vorrichtung (1) nach einem der vorstehenden Ansprüche, **dadurch gekennzeichnet, dass** das Gewinde ein selbstschneidendes Gewinde ist.

12. Vorrichtung (1) nach einem der vorstehenden Ansprüche, **dadurch gekennzeichnet, dass** das Material abtragende Werkzeug und der Stift (2) zumindest teilweise axial zueinander frei bewegbar sind.

13. Vorrichtung (1) nach einem der vorstehenden Ansprüche, **dadurch gekennzeichnet, dass** der Stift (2) zum Material abtragenden Werkzeug zumindest in eine Richtung axial gegen Herausrutschen gesichert ist.

14. Vorrichtung (1) nach einem der vorstehenden Ansprüche, **dadurch gekennzeichnet, dass** das Material abtragende Werkzeug, insbesondere mittels eines Aufnahmedorns (5) nach Anspruch 4 in eine Bohrmaschine einspannbar ist.

15. Vorrichtung (1) nach einem der vorstehenden Ansprüche, **dadurch gekennzeichnet, dass** der Stift (2) einen Durchmesser zwischen 1,5 und 15 mm hat.

16. Vorrichtung (1) nach einem der vorstehenden Ansprüche, **dadurch gekennzeichnet, dass** der Durchmesser des Material abtragenden Werkzeugs 1,5 bis 6. mm größer als der Durchmesser des Stiftes (2) ist.

17. Vorrichtung nach einem der vorstehenden Ansprüche, **dadurch gekennzeichnet, dass** Aufnahmedorn (5) und Stift durch zumindest eine Feder in axialer Richtung gespannt sind.

18. Vorrichtung nach Anspruch 17, **dadurch gekennzeichnet, dass** Aufnahmedorn (5) und Stift durch einen Sicherungsstift (13) oder einen Sicherungsring gegen Auseinanderfallen gesichert sind.

19. Vorrichtung nach Anspruch 19, **dadurch gekennzeichnet, dass** der Aufnahmedorn (5) zumindest eine Nut (14) aufweist, in der Sicherungsstift oder Sicherungsring einrastbar ist.

20. Vorrichtung nach einem der vorstehenden Ansprüche, **dadurch gekennzeichnet, dass** die Spanflächen des Kronenfräsers (4) angeschrägt sind, so dass eine Spanabfuhr nach oben erfolgt.

21. Vorrichtung (1) nach einem der vorstehenden Ansprüche, **dadurch gekennzeichnet, dass** die Spanflächen des Kronenfräsers (4) zumindest abschnittsweise in einem Winkel von 0,1° bis 30°, bevorzugt von 0,5° bis 15° zur Rotationsachse des Kronenfräsers verlaufen.

22. Vorrichtung (1) nach einem der vorstehenden Ansprüche, **dadurch gekennzeichnet, dass** der Kronenfräser (4) einen Spanwinkel von 0,1° bis 30°, bevorzugt von 0,5° bis 15° aufweist.

23. Vorrichtung (1) nach einem der vorstehenden Ansprüche, **dadurch gekennzeichnet, dass** die Schneidkanten (19) des Kronenfräsers (4) in zumindest zwei Stufen (20, 21) hinterschliffen sind.

24. Vorrichtung (1) nach Anspruch 24, **dadurch gekennzeichnet, dass** eine erste Stufe (20) einen Freiwinkel von 5° bis 30° und/oder eine zweite Stufe (21) einen Freiwinkel von 30° bis 70° aufweist.

## Claims

1. A device (1) for releasing a hollow rivet connection or a press nut, comprising:
a pin (2) having a thread (3) to be screwed into a hollow rivet connection or into a press nut;
at least one material removing tool (4) arranged rotationally around said pin (2), and wherein said pin (2), at least a lower end thereof, is insertable into a bore or thread of a rivet for retaining a lower portion of said rivet which is not to be milled off; the device being
**characterized in that**
it comprises a locking mechanism (11) by which said pin (2) may be locked to said material removing tool such as to protect the pin and the material removing tool from twisting relative to each other while said pin is screwed in.

2. The device (1) according to claim 1, **characterized in that** the material removing tool is provided in form of a milling cutter (4), in particular a crown milling cutter.

3. The device (1) according to claim 2, **characterized in that** the material removing tool comprises a retaining mandrel (5) to which said milling cutter (4) is attachable.

4. The device (1) according to claim 3, **characterized in that** said milling cutter (4) may be screwed to said retaining mandrel (5).

5. The device (1) according to any of the preceding claims, **characterized in that** said pin has a locking nut (9) close to its upper end.

6. The device (1) for releasing a rivet connection according to any of the preceding claims, **characterized in that** said locking mechanism (11) is provided in form of a latching mechanism.

7. The device (1) according to claim 7, **characterized in that** said latching mechanism is released beyond a predetermined torque.

8. The device according to any of the preceding claims, **characterized in that** a spring is arranged between said material removing tool and said pin which spring applies an axial force, at least in locked condition.

9. The device (1) according to any of the preceding claims, **characterized in that** said material removing tool is rotationally mounted around said pin on at least one and preferably two bearings.

10. The device (1) according to any of the preceding claims, **characterized in that** said material removing tool comprises at least one sleeve for receiving said pin (2).

11. The device (1) according to any of the preceding claims, **characterized in that** said thread is provided in form of a self-cutting thread.

12. The device (1) according to any of the preceding claims, **characterized in that** said material removing tool and said pin (2) are, at least partially, freely movable relative to each other.

13. The device (1) according to any of the preceding claims, **characterized in that** said pin (2) is protected from axially slipping off said material removing tool, at least in one direction.

14. The device (1) according to any of the preceding claims, **characterized in that** said material removing tool may be clamped in a drilling machine, in particular by means of a retaining mandrel (5) according to claim 4.

15. The device (1) according to any of the preceding claims, **characterized in that** a diameter of said pin (2) is between 1.5 and 15 mm.

16. The device (1) according to any of the preceding claims, **characterized in that** a diameter of said material removing tool is larger than that of said pin (2) by 1.5 to 6 mm.

17. The device according to any of the preceding claims, **characterized in that** said retaining mandrel (5) and said pin are biased in axial direction by at least one spring.

18. The device according to claim 17, **characterized in that** said retaining mandrel (5) and said pin are protected from falling apart by a safety pin (13) or a safety ring.

19. The device (1) according to claim 18, **characterized in that** said retaining mandrel (5) has at least one groove (14) in which said safety pin or safety ring can be snapped in.

20. The device according to any of the preceding claims, **characterized in that** said crown milling cutter (4) has faces which are beveled such that spills are removed upwardly.

21. The device (1) according to any of the preceding claims, **characterized in that** said faces of said crown milling cutter (4) extend, in at least portions thereof, in an angle from 0.1° to 30°, preferably from 0.5 to 15° relative to the rotational axes of said crown milling cutter.

22. The device (1) according to any of the preceding claims, **characterized in that** said crown milling cutter (4) has a cutting angle from 0.1° to 30°, preferably from 0.5° to 15°.

23. The device (1) according to any of the preceding claims, **characterized in that** the cutting edges (19) of said crown milling cutter (4) are provided with a relief grinding having at least two steps (20, 21).

24. The device (1) according to claim 23, **characterized in that** a first step has a relief angle from 5° to 30° and/or that a second step (21) has a relief angle from 30° to 70°.

## Revendications

1. Dispositif (1) pour détacher une liaison à rivet
creux ou un écrou d'insertion, comprenant une broche (2) qui présente un filetage (3) à visser dans une liaison à rivet creux ou un écrou d'insertion, au moins un outil (4) usant du matériau, lequel est disposé de façon à pouvoir tourner autour de la broche (2) et la broche (2) pouvant être introduite au moins par une extrémité inférieure dans un alésage ou un filetage d'un rivet, afin de maintenir la partie inférieure du rivet qui n'est pas enlevée par fraisage, **caractérisé en ce que** le dispositif comporte un mécanisme d'arrêt (11), la broche (2) pouvant être arrêtée contre l'outil usant du matériau, de sorte que la broche (2) et l'outil usant du matériau sont bloqués l'un par rapport à l'autre contre la torsion par le mécanisme d'arrêt pendant le vissage de la broche.

2. Dispositif (1) selon la revendication 1,
**caractérisé en ce que** l'outil usant le matériau est réalisé sous forme de fraise (4), en particulier sous forme de fraise à couronne.

3. Dispositif (1) selon la revendication 2,
**caractérisé en ce que** l'outil usant le matériau comporte un mandrin de réception (5), sur lequel la fraise (4) peut être fixée.

4. Dispositif (1) selon la revendication 3
**caractérisé en ce que** la fraise (4) peut être vissée sur le mandrin de réception (5).

5. Dispositif (1) selon l'une quelconque des
revendications précédentes, **caractérisé en ce que** la broche présente un écrou d'arrêt (9) à peu près sur l'extrémité supérieure.

6. Dispositif (1) pour détacher une liaison à rivet selon l'une quelconque des revendications précédentes,
**caractérisé en ce que** le mécanisme d'arrêt (11) est réalisé sous forme de mécanisme d'encliquetage.

7. Dispositif (1) selon la revendication 7,
**caractérisé en ce que** le mécanisme d'encliquetage se détache à partir d'un couple prédéfini.

8. Dispositif (1) selon l'une quelconque des revendications précédentes, **caractérisé en ce qu'**un ressort, qui exerce une force axiale au moins dans l'état arrêté, est disposé entre l'outil usant le matériau et la broche.

9. Dispositif (1) selon l'une quelconque des revendications précédentes, **caractérisé en ce que** l'outil usant le matériau est disposé sur au moins, de préférence deux paliers de façon rotative par rapport à la broche.

10. Dispositif (1) selon l'une quelconque des revendications précédentes, **caractérisé en ce que** l'outil usant du matériau comporte au moins une douille (8) pour la réception de la broche (2).

11. Dispositif (1) selon l'une quelconque des revendications précédentes, **caractérisé en ce que** le filetage est un filetage autotaraudeur.

12. Dispositif (1) selon l'une quelconque des revendications précédentes, **caractérisé en ce que** l'outil usant du matériau et la broche (2)peuvent être déplacés librement de façon réciproque au moins en partie axialement.

13. Dispositif (1) selon l'une quelconque des revendications précédentes, **caractérisé en ce que** la broche (2) est bloquée axialement contre un glissement au moins dans une direction par rapport à l'outil usant le matériau.

14. Dispositif (1) selon l'une quelconque des revendications précédentes, **caractérisé en ce que** l'outil usant le matériau peut être fixé dans une perceuse, en particulier au moyen d'un mandrin de réception (5) selon la revendication 4.

15. Dispositif (1) selon l'une quelconque des revendications précédentes, **caractérisé en ce que** la broche (2) a un diamètre compris entre 1,5 et 15 mm.

16. Dispositif selon l'une quelconque des revendications précédentes, **caractérisé en ce que** le diamètre de l'outil usant le matériau fait 1,5 à 6 mm de plus que le diamètre de la broche (2).

17. Dispositif selon l'une quelconque des revendications précédentes, **caractérisé en ce que** le mandrin de réception (5) et la broche sont tendus par au moins un ressort dans une direction axiale.

18. Dispositif selon la revendication 17, **caractérisé en ce que** le mandrin de réception (5) et la broche sont protégés contre une désagrégation par une goupille de blocage (13) ou une bague de blocage.

19. Dispositif selon la revendication 19, **caractérisé en ce que** le mandrin de réception (5) présente au moins une rainure (14) dans laquelle la goupille de blocage ou la bague de blocage peut être encliquetée.

20. Dispositif selon l'une quelconque des revendications précédentes, **caractérisé en ce que** les faces de coupe de la fraise à couronne (4) sont chanfreinées, de sorte qu'une évacuation de coupe s'effectue par le haut.

21. Dispositif (1) selon l'une quelconque des revendications précédentes, **caractérisé en ce que** les faces de coupe de la fraise à couronne (4) sont agencées au moins en partie dans un angle de 0,1° jusqu'à 30°, de préférence de 0,5° jusqu'à 15° par rapport à l'axe de rotation de la fraise à couronne.

22. Dispositif (1) selon l'une quelconque des revendications précédentes, **caractérisé en ce que** la fraise à couronne (4) présente un angle de coupe de 0,1° à 30°, de préférence de 0,5° à 15°.

23. Dispositif (1) selon l'une quelconque des revendications précédentes, **caractérisé en ce que** les arêtes de coupe (19) de la fraise à couronne (4) sont dépouillées à la meule sur au moins deux niveaux (20, 21).

24. Dispositif (1) selon la revendication 24,
**caractérisé en ce qu'**un premier niveau (20) présente un angle de dépouille de 5° à 30° et/ou un deuxième niveau (21) un angle de dépouille allant de 30° à 70°.
